(19) Europäisches Patentamt
European Patent Office
Office européen des brevets

(11) EP 2 155 808 B1

(12) **FASCICULE DE BREVET EUROPEEN**

(45) Date de publication et mention de la délivrance du brevet:
**14.12.2016 Bulletin 2016/50**

(21) Numéro de dépôt: **08805987.8**

(22) Date de dépôt: **12.06.2008**

(51) Int Cl.:
***B05D 5/10*** *(2006.01)* ***C08J 7/12*** *(2006.01)*
***G02B 1/04*** *(2006.01)* ***G02B 1/12*** *(2006.01)*
***G02B 1/10*** *(2006.01)*

(86) Numéro de dépôt international:
**PCT/FR2008/051052**

(87) Numéro de publication internationale:
**WO 2008/155507 (24.12.2008 Gazette 2008/52)**

# (54) PROCEDE DE TRAITEMENT DE LA SURFACE D'UN SUBSTRAT A BASE DE POLYMERE SOUFRE DESTINE A ETRE RECOUVERT PAR UN REVETEMENT

VERFAHREN ZUR BEARBEITUNG DER OBERFLÄCHE EINES MIT EINER BESCHICHTUNG ABZUDECKENDEN SUBSTRATS AUF BASIS EINES SCHWEFELPOLYMERS

METHOD FOR TREATING THE SURFACE OF A SUBSTRATE BASED ON SULPHUR POLYMER, INTENDED TO BE COVERED WITH A COATING

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.06.2007 FR 0755744**

(43) Date de publication de la demande:
**24.02.2010 Bulletin 2010/08**

(73) Titulaire: **Essilor International (Compagnie Générale d'Optique)**
**94220 Charenton-le-Pont (FR)**

(72) Inventeurs:
- **CALBA, Pierre-Jean**
  **F-94220 Charenton Le Pont (FR)**
- **MARTIN, Joseph**
  **F-94220 Charenton Le Pont (FR)**

(74) Mandataire: **Catherine, Alain et al**
**Cabinet HARLE et PHELIP**
**14-16, rue Ballu**
**75009 Paris (FR)**

(56) Documents cités:
**EP-A- 0 745 620** **EP-A- 1 053 279**
**EP-A- 1 273 639**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 155 808 B1

## Description

L'invention se rapporte à un procédé de traitement d'au moins une surface d'un substrat à base de polymère soufré destiné à être recouvert par un revêtement, ledit procédé améliorant l'adhésion du revêtement au substrat.

Il est classique, dans le domaine de l'optique ophtalmique, de revêtir les surfaces d'un substrat en verre organique telle qu'une lentille ophtalmique en verre organique, par exemple un verre de lunette, avec des revêtements tels que des revêtements durs anti-abrasion, pour améliorer la résistance de la lentille ophtalmique obtenue aux rayures et aux chocs.

Un problème associé à ces substrats en verre organique revêtus concerne l'adhésion du revêtement au substrat.

Il est connu de traiter la surface des substrats en verre organique préalablement au dépôt du revêtement sur la surface, par une solution aqueuse de soude.

On connaît également du document EP 1 053 279 un procédé de revêtement de la surface d'un substrat en verre organique comprenant, préalablement au dépôt du revêtement sur la surface du substrat, la mise en contact de la surface du substrat avec une solution aqueuse de traitement contenant un agent tensioactif et ayant un pH acide.

Cependant, ces procédés de l'art antérieur, même s'ils conduisent à des résultats corrects, ne donnent pas entièrement satisfaction. On constate, dans un certain nombre de cas, un problème de décollement du revêtement anti-abrasion.

Sans vouloir être lié par une quelconque théorie, la demanderesse a identifié différentes causes qui pourraient être responsables du décollement de la couche anti-abrasion.

Une première cause de la fragilité de l'adhésion du revêtement anti-abrasion sur le substrat réside dans le fait que l'interface substrat/revêtement anti-abrasion peut généralement être décrite comme une interface bien individualisée d'un empilement monocouche sur monocouche. Ceci est du à l'absence de diffusion du revêtement anti-abrasion dans le substrat, à une préparation de surface en général peu propice à la création de liaisons covalentes et à une rugosité de surface extrêmement faible du substrat.

De ce fait, les liaisons chimiques de faible énergie (liaisons hydrogènes à partir du soufre ou de l'oxygène) sont majoritaires par rapport aux liaisons covalentes. Elles participent donc plus activement que les liaisons covalentes aux mécanismes d'adhésion du revêtement anti-abrasion sur le substrat.

En outre, sous l'action du rayonnement UV-A, les fonctions thioéthers, par exemples les fonctions thioéthers d'un polythiouréthane, présentes au niveau de l'interface, sont dégradées, par coupure de la chaîne polymérique au voisinage des extrémités de chaînes pendantes, pour donner des produits de dégradation qui sont des petites molécules organiques. Ces produits de dégradation sont acheminés par des mécanismes de migration et de diffusion dans tous les interstices du matériau où ils vont pouvoir créer de véritables puits de corrosion traversant ainsi la totalité de l'épaisseur du revêtement anti-abrasion. Ces produits de dégradation s'accumulant dans le substrat, on assiste à une minéralisation du substrat.

Enfin, la photosensibilité extrême au rayonnement UV-A de certains substrats polymériques, en particulier soufrés, et plus spécialement de certains polythiouréthanes, contribue à affaiblir les forces d'adhésion présentes sur l'interface substrat/revêtement anti-abrasion. Pour certains substrats, sous l'effet du rayonnement UV-A, on assiste à une photocyclisation des motifs thioéthers des premières couches du substrat conduisant à la rupture des liaisons faibles présentes à l'interface, comme cela est représenté sur la figure 1.

La cyclisation est particulièrement favorisée lorsque le soufre et l'azote se trouvent en position 1,6 l'un par rapport à l'autre.

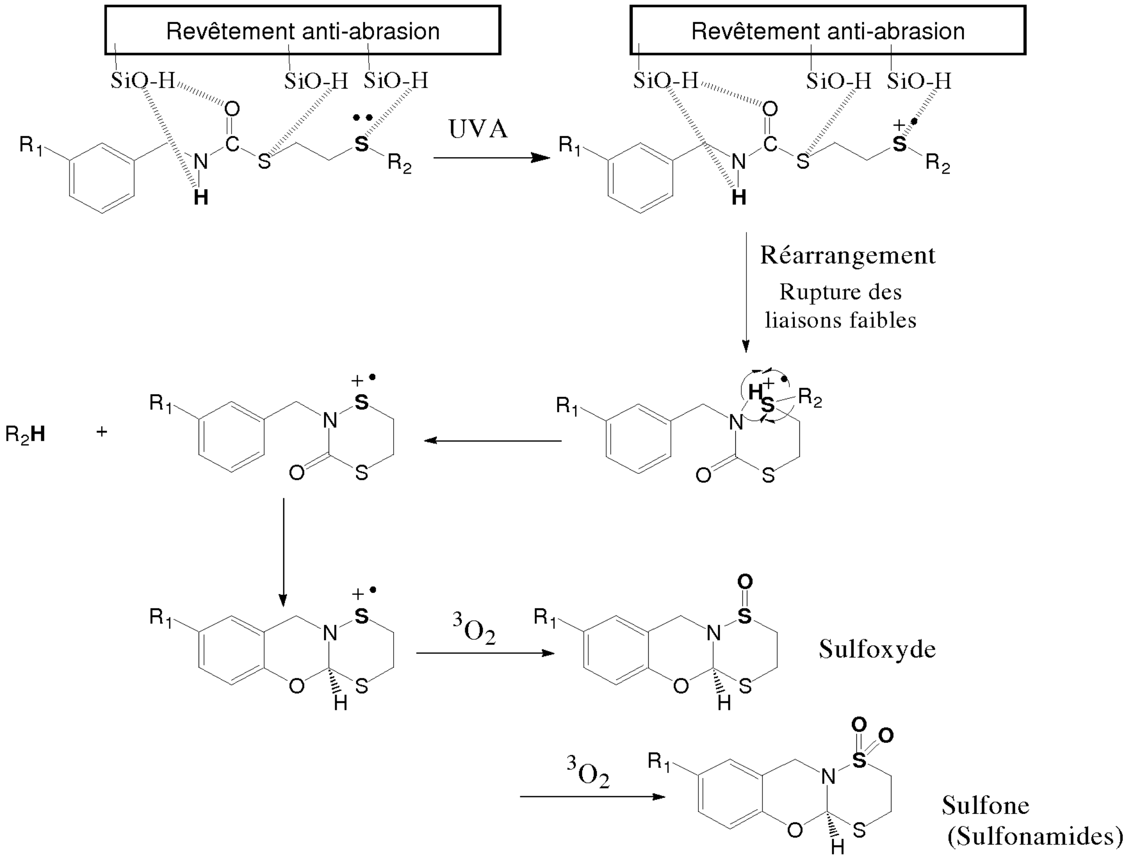


FIG1

R1 et R2 représentent les chaines du réseau polymérique auquel le groupement représenté est lié.

Il existe donc un besoin de résoudre les problèmes de l'art antérieur et de disposer d'un procédé de traitement de la surface d'un substrat à base de polymère soufré destiné à être recouvert par un revêtement, qui augmente l'adhésion du revêtement sur le substrat et qui ralentisse le phénomène de jaunissement du substrat du à la photooxydation.

La demanderesse a découvert que cela pouvait être obtenu par un procédé comprenant une étape de mise en contact de la surface du substrat avec un agent qui diminue la photoréactivité des fonctions thioéther du substrat.

L'invention a donc pour objet un procédé de traitement d'au moins une surface d'un substrat à base de polymère soufré destiné à être recouvert par un revêtement, tel que défini à la revendication 1. Le procédé comprend, préalablement au dépôt du revêtement sur la surface du substrat, une étape de mise en contact de la surface du substrat avec une composition de traitement comprenant, en poids, par rapport au poids total de la composition, 2 à 30% d'au moins un agent réducteur, le ou les agents réducteurs étant des thioacides ou leurs sels aptes à réduire les liaisons C-S, S-S, CON, les sels.

Sans vouloir être lié par une quelconque théorie, les inventeurs pensent que l'agent réducteur selon l'invention diminue la photoréactivité des fonctions thioéther du substrat, c'est-à-dire qu'il permet de fonctionnaliser le polymère du substrat par la création de liaisons SH, qu'il limite la dégradation des fonctions thioéther en des produits de dégradation sous l'action du rayonnement UV-A, ou qu'il empêche la cyclisation des chaînes soufrées, en particulier des motifs thioéthers, des premières couches du substrat sous l'effet du rayonnement UV-A.

Le ou les agents réducteurs utilisables dans le procédé selon l'invention sont ainsi les thioacides ou leurs sels classiquement utilisés pour réduire les liaisons C-S, S-S, CON (amide), les sels, préférentiellement les liaisons C-S et S-S.

A titre d'agents réducteurs utilisables dans le procédé selon l'invention, on peut citer en particulier l'acide thioglycolique, le thioglycolate de potassium, le thioglycolate de sodium, le thioglycolate de calcium, le thioglycolate de magnésium, le monothioglycolate de glycérol, le thioglycolate d'ammonium, les thioglycolates d'amines tel que le thioglycolate de monoéthanolamine, le dithioglycolate de diammonium, l'acide thiolactique, le thiolactate d'ammonium, le thioglycolate de guanidine, l'acide thiomalique, l'acide 2-mercaptoproprionique, l'acide 3-mercaptoproprionique, l'acide lipoïque, l'acide dihydrolipoïque, l'acide thiosalicylique, le dithioérythritol, le thioglycérol, le thioglycol, le dithioérythritol, le dithiothréitol, le 1,3-dithiopropanol, la thioxanthine, la cystéine, l'homocystéine, la N-acétyl-L-cystéine, la cystéamine, la N-acétyl-cystéamine, la N-propionyl-cystéamine, la panthétéine, $NaHSO_3$, LiS, $Na_2S$, $K_2S$, MgS, CaS, SrS, BaS, $(NH_4)_2S$, le sodium dihydrolipoate 6,8-dithiooctanoate, le sodium 6,8-dithiooctanoate, les sels de l'acide sulfhydrique

tel que NaSH et KSH, le thioglycolamide, la glutathione, le thioglycolhydrazide, la kératinase, le sulfate d'hydrazine, le disulfate d'hydrazine, le triisocyanate, l'acide 2,3-dimercaptosuccinique, les N-(mercaptoalkyl)-ω-hydroxyalkylamides, les N-mono ou N,N-dialkylmercapto-4-butyramides, les aminomercapto-alkylamides, les dérivés des acides N-(mercaptoalkyl)succinamiques et des N-(mercaptoalkyl)succinimides, les alkylamino mercaptoalkylamides, le mélange azéotrope de thioglyconate de 2-hydroxypropyle et de thioglycolate de (2-hydroxy-1-méthyl)éthyle, les mercaptoalkylaminoamides, les N-mercapto-alkylalcanediamides et les dérivés d'acide formamidine sulfinique, les sulfites, les bisulfites, et leurs sels.

Les agents réducteurs préférés parmi les thioacides ou leurs sels sont préférentiellement choisis parmi le thioglycolate de sodium, le thioglycolate de potassium, le thioglycolate d'ammonium et les thioglycolates d'amines.

Lorsque le ou les agents réducteurs sont des thioacides, la ou les fonctions SH sont de préférence sous la forme $S^-$, et la ou les fonctions carboxyles sont de préférence sous la forme $COO^-$.

Ainsi, de préférence, le pH de la composition de traitement est supérieur à 10, mieux supérieur à 12.

Le pH de la composition de traitement selon l'invention peut être obtenu et/ou ajusté classiquement par ajout d'agents alcalins, tels que par exemple l'ammoniaque, la monoéthanolamine, la diéthanolamine, la triéthanolamine, l'isopropanolamine, la propanediamine-1,3, un carbonate ou bicarbonate alcalin ou d'ammonium, un carbonate organique tel que le carbonate de guanidine, ou bien encore un hydroxyde de métal alcalin, tel que l'hydroxyde de potassium, ou un hydroxyde de métal alcalino-terreux, tel que l'hydroxyde de calcium, tous ces composés pouvant bien entendu être pris seuls ou en mélange.

La composition de traitement comprend de 2 à 30%, de préférence de 2 à 15%, mieux de 5 à 10% en poids, par rapport au poids total de la composition, du ou desdits agents réducteurs.

Avantageusement, la composition de traitement comprend au moins un sulfure métallique.

Avantageusement, la composition de traitement comprend de l'urée. Dans ce cas, l'urée est généralement présente à une teneur comprise entre 0,1% et 20% en poids, de préférence 0,5% et 10% en poids, par rapport au poids total de la composition de traitement.

Généralement, la composition de traitement comprenant le ou les agents réducteurs comprend un solvant. A titre de solvant utilisable, on peut citer l'eau, les alcools en $C_1$-$C_6$, de préférence les alcanols tels que l'éthanol, le propanol et l'isopropanol, les alcanediols tels que l'éthylèneglycol, le propylène glycol et le pentanediol, l'alcool benzylique, les alcanes en $C_5$-$C_{10}$, l'acétone, la méthyléthylcétone, l'acétate de méthyle, l'acétate d'éthyle, l'acétate de butyle, le diméthoxyéthane, le diéthoxyéthane et leurs mélanges.

Des compositions de traitement comprenant un ou plusieurs agents réducteurs utilisables dans le procédé selon l'invention sont décrites à titre de composition dépilatoire dans le brevet GB 2 413 074.

Des compositions dépilatoires disponibles commercialement peuvent être utilisées. A titre d'exemple, on peut citer la crème dépilatoire Veet.

Le temps de traitement par la composition selon l'invention varie de préférence de 1 à 30 minutes, mieux de 1 à 15 minutes, et mieux encore de 5 à 10 minutes.

La température de traitement varie préférentiellement de 5 à 30°C, mieux de 5 à 15 °C. Dans un mode optimal de réalisation de l'invention, le traitement est effectué à température ambiante.

Le traitement est de préférence effectué en trempant le substrat dans un bain de composition selon l'invention.

Le traitement avec l'agent réducteur peut être répété plusieurs fois de suite, préférentiellement jusqu'à cinq fois de suite, préférentiellement de 1 à 3 fois de suite.

Comme expliqué précédemment, le procédé selon l'invention comprend une étape de mise en contact de la surface du substrat avec une composition de traitement comprenant au moins un agent réducteur.

Avantageusement, de l'énergie ultrasons est appliquée à la composition de traitement lorsqu'elle est en contact avec la surface du substrat.

De préférence, le procédé selon l'invention ne comprend pas d'étape subséquente d'application sur le substrat d'une solution de soude.

Ainsi, le procédé selon l'invention permet de réduire les liaisons C-S et/ou S-S du polymère soufré formant le substrat, ce qui conduit à la fonctionnalisation du polymère par la création de liaisons SH en surface, généralement sur une épaisseur inférieure à 1 $\mu$m.

Le procédé selon l'invention permet aussi de limiter la production de produits de dégradation lors de l'exposition du substrat au rayonnement UV-A.

Selon un mode particulier de mise en oeuvre de l'invention, le procédé comprend au moins une étape additionnelle de traitement par mise en contact du substrat avec une composition oxydante comprenant au moins un agent oxydant.

Ce ou ces étape(s) additionnelles de traitement au moyen d'une composition oxydante peuvent être effectuées avant et/ou après l'étape de traitement par l'agent réducteur.

Sans vouloir être lié par une quelconque théorie, on pense que ces agents oxydants diminuent la photoréactivité des fonctions thioéther du substrat et en particulier empêchent la photocyclisation sous l'effet du rayonnement UV-A

des chaînes soufrées du substrat en oxydant le soufre proche de l'azote, en particulier le soufre situé en position 6 de l'azote, (comme représenté en figure 1) qui n'est alors plus disponible pour réagir dans la réaction de cyclisation. L'agent oxydant permettrait d'empêcher la cycloaddition 1,6 des motifs thioéthers par l'adsorption chimique d'éléments apportés par l'agent oxydant, comblant toutes les orbitales atomiques vacantes de la couche électronique externe du soufre.

L'adsorption chimique permet également de renforcer les interactions moléculaires du substrat avec le revêtement lorsque celui-ci sera déposé, notamment par la création de sites polaires.

Le ou les agents oxydants sont généralement choisis parmi l'eau oxygénée, les bromates alcalins, les polythionates et les persels, tels que les perborates, les percarbonates, les persulfates et les permanganates.

De préférence, le ou les agents oxydants sont choisis parmi $H_2O_2$ ou $KMnO_4$.

Généralement, le ou les agents oxydants sont compris dans la composition oxydante à une teneur comprise entre 2 et 15%, de préférence 5 et 10% en poids, par rapport au poids total de la composition oxydante.

De préférence, le pH de la composition oxydante contenant le ou lesdits agents oxydants est inférieur à 7.

Généralement, la composition oxydante comprenant le ou les agents oxydants comprend un solvant. A titre de solvant utilisable, on peut citer l'eau, les alcools en $C_1$-$C_6$, de préférence les alcanols tels que l'éthanol, le propanol et l'isopropanol, les alcanediols tels que l'éthylèneglycol, le propylène glycol et le pentanediol, l'alcool benzylique, les alcanes en $C_5$-$C_{10}$, l'acétone, la méthyléthylcétone, l'acétate de méthyle, l'acétate d'éthyle, l'acétate de butyle, le diméthoxyéthane, le diéthoxyéthane et leurs mélanges.

Selon un autre mode particulier de réalisation de l'invention, le procédé comprend au moins une étape additionnelle de traitement par mise en contact du substrat avec une composition de phosphorylation comprenant au moins un agent de phosphorylation.

Ce ou ces étape(s) additionnelles de traitement au moyen d'une composition de phosphorylation peuvent être effectuées avant et/ou après l'étape de traitement par l'agent réducteur.

Par agent de phosphorylation, on entend au sens de la présente invention un agent qui permet d'introduire un phosphore ou un phosphate dans une combinaison organique.

Le ou les agents de phosphorylation sont généralement choisis parmi les trialkylphosphites, l'acide phosphonique et l'acide phosphinique.

L'agent de phosphorylation permet d'empêcher la cycloaddition 1,6 des motifs thioéthers par l'adsorption chimique de cet agent sur les atomes de soufre des fonctions thioéthers. Cela offre au substrat de nombreuses possibilités d'interactions chimiques avec le revêtement lorsque celui-ci sera déposé.

Généralement, le ou les agents de phosphorylation sont compris dans la composition de phosphorylation à une teneur comprise entre 2% et 15%, de préférence entre 5 et 10%, en poids par rapport au poids total de la composition de phosphorylation.

De préférence, le pH de la composition comprenant l'agent de phosphorylation est inférieur à 7.

Généralement, la composition comprenant le ou les agents de phosphorylation comprend un solvant. A titre de solvant utilisable, on peut citer l'eau, les alcools en $C_1$-$C_6$, de préférence les alcanols tels que l'éthanol, le propanol et l'isopropanol, les alcanediols tels que l'éthylèneglycol, le propylène glycol et le pentanediol, l'alcool benzylique, les alcanes en $C_5$-$C_{10}$, l'acétone, la méthyléthylcétone, l'acétate de méthyle, l'acétate d'éthyle, l'acétate de butyle, le diméthoxyéthane, le diéthoxyéthane et leurs mélanges.

Préférentiellement, le procédé selon l'invention ne comprend pas d'étape additionnelle de traitement par une composition oxydante ou de phosphorylation.

Comme expliqué précédemment, le substrat est à base de polymère soufré.

Généralement, le polymère soufré du substrat est choisi parmi les polythio(méth)acrylates, les polythiouréthanes, les polythiouréthane-urée et les polyépisulfures.

Les polythio(méth)acrylates utilisables comme substrat dans le procédé selon l'invention peuvent être choisis parmi tous les polythio(méth)acrylates classiquement utilisés dans l'optique ophtalmique, en particulier dans la préparation de lentilles ophtalmiques.

Des monomères précurseurs des polythio(méth)acrylates utilisables dans la composition selon l'invention sont décrits notamment dans le brevet US 5 741 831.

Selon un mode de réalisation préféré, le polymère soufré est un polythiouréthane résultant de la polymérisation d'au moins un monomère polyisocyanate et/ou un prépolymère de celui-ci et d'au moins un monomère polythiol et/ou un prépolymère de celui-ci.

Les monomères polythiols convenant pour les compositions selon la présente invention sont bien connus dans la technique et peuvent être représentés par la formule $R'(SH)_n$, dans laquelle n' est un entier de 2 ou plus, de préférence de 2 à 5, et R' un radical aliphatique, aromatique ou hétérocyclique.

Les polythiols sont décrits entre autre dans le document EP 394 495.

Parmi les polythiols utilisables selon l'invention, on peut citer le 9,10-anthracènediméthanethiol, le 1,11-undécanedithiol, le 4-éthyl-benzène-1,3-dithiol, le 1,2-éthanedithiol, le 1,8-octanedithiol, le 1,18-octadécanedithiol, le 2,5-dichlorobenzène-1,3-dithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3 diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane-2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercapto-octanoïque, le 2,5-dimercapto-1,3,4-thiadiazole, le 2,2'-dimercapto-biphényle, le 4,4'-dimercaptobiphényle, le 4,4'-dimercaptobibenzyle, le 3,4-dimercaptobutanol, le 3,4-dimercaptobutylacétate, le 2,3-dimercapto-1-propanol, le 1,2-dimercapto-1,3-butanediol, l'acide 2,3-dimercaptopropionique, le 1,2-dimercaptopropyl-méthyléther, le 2,3-dimercaptopropyl-2',3'-diméthoxypropyélther, le 3,4-thiophènedithiol, le 1,10-décanedithiol, le 1,12-docécanedithiol, le 3,5,5-triméthylhexane-1,1-dithiol, le 2,5-toluènedithiol, le 3,4-toluènedithiol, le 1,4-naptalènedithiol, le 1,5-naphtalènedithiol, le 2,6-naphtalènedithiol, le 1,9-nonanedithiol, le norbornène-2,3-dithiol, le bis(2-mercaptoisopropyl)éther, le bis(11-mercaptoundécyl)sulfure, le bis(2-mercaptoéthyl)éther, le bis(2-mercaptoéthyl)sulfure, le bis(18-mercaptooctadécyl)sulfure, le bis(8-mercaptooctyl)sulfure, le bis(12-mercapto-décyl)sulfure, le bis(9-mercaptononyl)sulfure, le bis(4-mercaptobutyl)sulfure, le bis(3-mercaptopropyl)éther, le bis(3-mercaptopropyl)sulfure, le bis(6-mercaptohexyl)sulfure, le bis(7-mercaptoheptyl)sulfure, le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiol, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3mercaptopropionate). Parmi les trithiols, on peut citer le 1,2,3-propanetrithiol, le 1,2,4-butanetrithiol, le triméthylolpropanetrithiol glycolate, le triméthylopropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans la présente invention, le néopentane tétrathiol, le 2,2'-bis(mercaptométhyl)-1,3-propanedithiol, le pentaérythritol tétrakis(3-mercaptopropionate), le 1,3,5-benzènetrithiol, le 2,4,6-toluènetrithiol, le 2,4,6-méthylènetrithiol, et les polythiols correspondant aux formules :

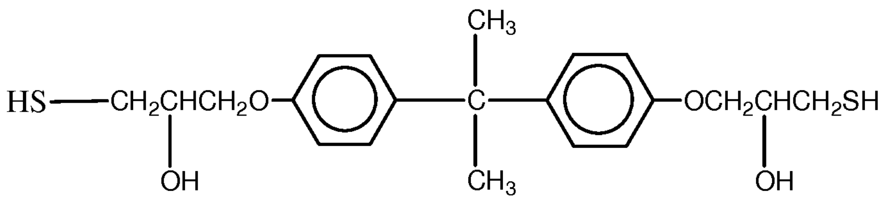

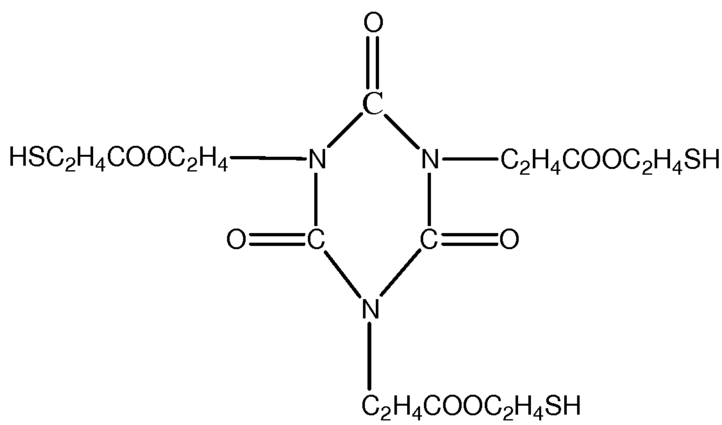

$(HSCH_2CH_2COOCH_2)_3CC_2H_5$ (TTMP), et
le 4-mercaptométhyl-3,6-dithia-1,8-octanedithiol.

Un polythiol préféré est le composé de formule suivante :

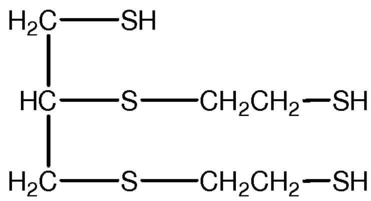

Les composés polyisocyanates utilisables selon l'invention peuvent être tous polyisocyanates généralement utilisés pour formuler des polyuréthanes.

On peut citer en particulier des composés aliphatiques tels que éthylène diisocyanate, triméthylène diisocyanate, tétraméthylène diisocyanate, hexaméthylène diisocyanate, octaméthylène diisocyanate, nonaméthylène diisocyanate, 2,2'-diméthylpentane diisocyanate, 2,2,4-triméthylhexane diisocyanate, décaméthylène diisocyanate, butène diisocyanate, 1,3-butadiène-1,4-diisocyanate, 2,4,4-triméthylhexaméthylène diisocyanate, 1,6,11-undécane triisocyanate, 1,3,6-héxaméthylène triisocyanate, 1,8-diisocyanato-4-isocyanatométhylotane, 2,5,7-triméthyl-1,8-diisocyanato-5-isocyanatométhyloctane, bis(isocyanatoéthyl)carbonate, bis(isocyanatoéthyl)éther,1,4-butylèneglycol dipropyléther-ω,ω'-diisocyanate, lysine diisocyanatométhyl ester, lysine triisocyanate, 2- isocyanatoéthyl-,2,6-diisocyanato hexanoate, 2-isocyanatopropyl-2,6-diisocyanato hexanoate, xylylène diisocyanate, bis(isocyanatoéthyl)benzène, bis-(isocyanatopropyl)benzène, a, a, a',a'-tetraméthylxylylène diisocyanate, bis(isocyanatobutyl)benzène, bis-(isocyanatométhyl)napthalène, bis(isocyanatométhyl)-diphényl éther, bis (isocyanatoéthyl)phthalate, mésitylylène triisocyanate et 2,6-di(isocyanatométhyl)furane ; alicyclic polyisocyanates tels que isophorone diisocyanate, bis(isocyanatométhyl)cyclohexane, dicyclohexylméthane diisocyanate, cyclohexane diisocyanate, méthylcyclohexane diisocyanate, dicyclohexyldiméthylméthane diisocyanate, 2,2'-diméthyldicyclohexylméthane diisocyanate, bis(4-isocyanato-n-butylidène)-pentaerythritol, dimer acid diisocyanate, 2-isocyanatométhyl-3-(3-isocyanatopropyl)-5-isocyanato-méthyl-bicyclo-(2,2,1)-heptane, 2-isocyanatométhyl-2-(3-isocyanatopropyl)-6-isocyanatométhyl-bicyclo-(2,2,1)-heptane, 2-isocyanatométhyl-2-(3-isocyanatopropyl)-5-isocyanatométhyl-bicyclo-(2,2,1)-heptane, 2-isocyanatométhyl-3-(3-isocyanatopropyl)-6-isocyanatométhyl-bicyclo-(2,2,1)-heptane, 2-isocyanatométhyl-3-(3-isocyanatopropyl)-5-(2-isocyanatométhyl)-bicyclo-(2,2,1)-heptane, 2-isocyanatométhyl-3-(3-isocyanatopropyl)-6-(2-isocyanatoéthyl)-bicyclo-(2,2,1)-heptane, 2-isocyanatométhyl-2-(3-isocyanatopropyl)-5-(2-isocyanatoéthyl)-bicyclo-(2,2,1)-heptane et 2-isocyanatométhyl-2-(3-isocyanatopropyl)-6-(2-isocyanatoéthyl)-bicyclo-(2,2,1)-heptane et les composés aromatiques tels que le phénylène diisocyanate, tolylène diisocyanate, éthylphénylène diisocyanate, isopropylphénylène diisocyanate, diméthylphénylène diisocyanate, diéthylphénylène diisocyanate, diisopropylphénylène diisocyanate, triméthylbenzène triisocyanate, benzène triisocyanate, naphthalène diisocyanate, méthylnaphthalène diisocyanate, biphényl diisocyanate, tolidine diisocyanate, 4,4'-diphénylméthane diisocyanate, 3,3'-diméthoxybiphényl-4,4'-diisocyanate, triphénylméthane triisocyanate, MDI polymérique, naphthalène triisocyanate, diphénylméthane-2,4,4'-triisocyante, 3-méthyldiphénylméthane-4,6,4'-triisocyanate, 4-méthyldiphénylméthane-3,5,2',4',6'-pentaisocyanate, phénylisocyanatométhyl isocyanate, phénylisocyanatoéthyl isocyanate, tétrahydronaphthylène diisocyanate, hexahydrobénène diisocyanate, hexahydrodiphénylméthane-4,4'-diisocyanate, diphényl éther diisocyanate, éthylène glycol diphényl éther diisocyanate, 1,3-propylène glycol diphényl éther diisocyanate, benzophénone diisocyanate, diéthylène glycol diphényl éther diisocyanate, dibenzofurane diisocyanate, carbazole diisocyanate, éthylcarbazole diisocyanate et dichlorocarbazole diisocyanate ; sulfure contenant des polyisocyanates aliphatiques tels que thiodiéthyl diisocyanate, thiodipropyl diisocyanate, thiodihéxyl diisocyanate, diméthyl sulfone diisocyanate, dithiodiméthyl diisocyanate, dithiodiéthyl diisocyanate, et dithiodipropyl diisocyanate ; des polyisocyanates aromatiques soufrés tels que diphénylsulfure-2,7'-diisocyanate, diphénylsulfure-4,4'-diisocyanate, 3,3'-diméthoxy-4,4,-diisocyanatodibenzylthioéther, bis(4-isocyanatométhylphényl)sulfure, et 4,4-méthoxyphénylthioéthylèneglycol-3,3'-diisocyanate, diphényldisulfure-4,4'-diisocyanate, 2,2'-diméthyldiphényldisulfure-5,5'-diisocyanate, 3,3'-diméthyldiphénylsulfure-6,6'-diisocyanate, 4,4'-diméthylphényldisulfure-5,5'-diisocyanate, 3,3'-diméthoxydiphényldisulfure-4,4'diisocyanate, et 4,4'-diméthoxy-diphényldisulfure-3,3'-diisocyanate ; diphénylsulfone-4,4'-diisocyanate, diphénylsulfone-3,3'-diisocyanate, benzi-dinesulfone-4,4'-diisocyanate, diphénylméthanesulfone-4,4'-diisocyanate, 4-méthyldiphénylsulfone-2,4'-diisocyanate, 4,4'-diméhtoxydiphénylsulfone-3,3'diisocyanate, 3,3'-diméthoxy-4,4'-diisocyanatodibenzyl sulfone, 4,4'-diméthyldiphénylsulfone-3,3'diisocyanate, 4,4'-ditert-butyldiphénylsulfone-3,3'-diisocyanate, 4,4'-méthoxyphényléthylènedisulfone-3,3'-diisocyanate ; 4-méthyl-3-isocyanato-phénylsulfonyl-4'-isocyanatophénol ester et 4-méthoxy-3-isocyanatophénylsulfonyl-4'-isocyanatophényl ester ; des polyisocyanates aromatiques contenant un groupe sulfonamide tels que 4-méthyl-3-isocyanatophénylsulfonylanilide-3'-méthyl-4'-isocyanate, diphénylsulfonyléthylènediamine-4,4'-diisocyanate, 4,4'-méthoxyphénylsulfonyléthylène-diamine-3,3'-diisocyanate, et 4-méthyl-3-isocyanatophénylsulfonylanilide-4-méthyl-3'-isocyanate des composés hétérocycliques contenant du soufre tels que thiophène-2,5-diisocyanate ; et 1,4-dithian-2,5-diisocyanate.

Un polyisocyanate préféré est le composé de formule $C_6H_4(CH_2NCO)_2$.

Des compositions polymérisables à base de polythiols et de polyisocyanates utilisables selon l'invention sont

décrites notamment dans les brevets US 5 087 758, US 5 191 055 et US 4 775 733, US 4 689 387, US 5 837 797 et US 5 608 115.

Comme expliqué précédemment, le polymère soufré du substrat peut être choisi parmi les polythiouréthane-urée.

Des compositions polymérisables conduisant à des substrats à base de polythiouréthane-urée sont décrites notamment dans la demande internationale WO 03/042270.

Comme expliqué précédemment, le polymère soufré du substrat peut être également être choisi parmi les polyépisulfures.

Des compositions polymérisables de monomères épisulfures sont décrites entre autres dans les documents EP 874 016 et EP 0 942 027.

De préférence, les monomères polymérisables ayant au moins une fonctionnalité épisulfure sont des composés ayant une ou plusieurs structures épisulfure représentées par la formule ci-dessous dans une molécule :

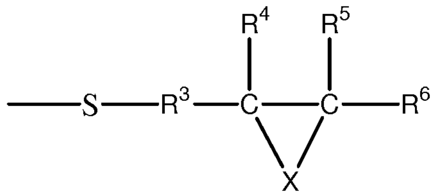

dans laquelle $R^3$ représente un groupe hydrocarboné ayant 1 à 10 atomes de carbone, $R^4$, $R^5$ et $R^6$ représentent chacun un atome hydrogène ou un groupe hydrocarboné ayant 1 à 10 atomes de carbone, X représente S ou O à la condition que dans la molécule le nombre moyen de S représenté par X soit de préférence d'environ 50% ou plus du nombre total de S et O constituant le cycle à 3 chaînons.

Une classe préférée de monomères épisulfure polymérisables est représentée par les composés de formule :

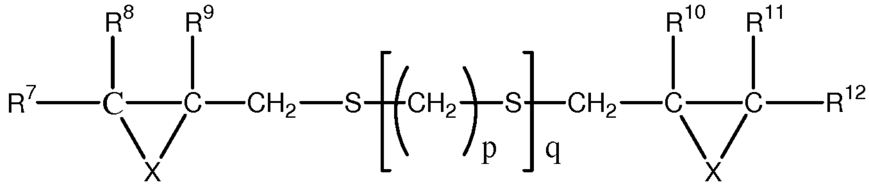

dans laquelle $R^7$, $R^8$, $R^9$, $R^{10}$, $R^{11}$ et $R^{12}$ représente chacun un atome d'hydrogène ou un groupe hydrocarboné ayant 1 à 10 atomes de carbone; X représente S ou O à la condition que dans la molécule le nombre moyen de S représenté par X soit d'environ 50 % ou plus du nombre total de S et O constituant les cycles à 3 chaînons, p représente un entier de 0 à 6 et q représente un entier de 0 à 4.

De préférence, $R^3$ représente un groupe méthylène ou éthylène et $R^4$, $R^5$ et $R^6$ et $R^7$, $R^8$, $R^9$, $R^{10}$, $R^{11}$ et $R^{12}$ représentent de préférence chacun un atome d'hydrogène, un groupe méthyle. De préférence encore, $R^3$ représente un groupe méthylène et $R^4$, $R^5$, $R^6$, $R^7$, $R^8$, $R^9$, $R^{10}$, $R^{11}$ et $R^{12}$ représentent chacun un atome d'hydrogène.

Le nombre moyen de S est 50% ou plus, de préférence 90% ou plus, mieux 95% ou plus idéalement 100% du nombre total de S et O constituant les cycles à 3 chaînons.

Des exemples de ces composés incluant des composés organiques linéaires tels que bis(β-épithiopropylthio)méthane, 1,2-bis(β-épithiopropylthio)éthane, 1,3-bis(β-épithiopropylthio)propane, 1,2-bis(β-épithiopropylthio)propane, 1-(β- épithio propylthio)-2-(β-épithiopropylthiométhyl)propane, 1,4-bis(β-épithiopropyl thio)butane, 1,3-bis(β-épithiopropylthio)butane, 1-(β-épithiopropylthio)-3-(β-épithiopropylthioméhtyl)butane, 1,5-bis(β-épithiopropylthio)pentane, 1-(β-épithiopropylthio)-4-(β-épithiopropylthiométhyl)pentane, 1,6-bis(β-épithio propylthio)hexane, 1-(β-épithiopropylthio)-5-(β-épithiopropylthiométhyl) hexane, 1-(β-épithiopropylthio)-2-[(2-β-épithiopropylthioéthyl) thio] éthane

et 1-(β-épithiopropylthio)-2-[[2-(2-β-épithiopropylthioéthyl)thioéthyl] thio]éthane ; des composés organiques ramifiés tels que tétrakis(β-épithio propylthiométhyl)méthane, 1,1,1-tris(β-épithiopropylthiométhyl)propane, 1,5-bis(β-épithiopropylthio)-2-(β-épithiopropylthiométhyl)-3-thiapentane, 1,5-bis(β-épithiopropylthio)-2,4-bis(β-épithiopropylthiométhyl)-3-thiapentane, 1-(β-épithiopropylthio)-2,2-bis(β-épithiopropylthiométhyl)-4-thiahexane, 1,5,6-tris(β-épithiopropylthio)-4-(β-épithiopropylthiométhyl)-3-thiahexane, 1,8-bis(β-épithiopropylthio)-4-(β-épithiopropylthiométhyl)-3,6-dithiaoctane, 1,8-bis(β-épithiopropylthio)-4,5-bis(β-épithiopropylthiométhyl)-3,6-dithiaoctane, 1,8-bis(β-épithiopropylthio)-4,4-bis(β-épithiopropylthiométhyl)-3,6-dithiaoctane, 1,8-bis(β-épithiopropylthio)-2,4,5-tris(β-épithiopropylthiométhyl)-3,6-dithiaoctane, 1,8-bis(β-épithiopropylthio)-2,5-bis(β-épithiopropylthiométhyl)-3,6-dithiaoctane, 1,9-bis(β-épithiopropylthio)-5-(β-épithiopropylthiométhyl)-5-[(2-β-épithiopropylthioéthyl)thiométhyl]-3-7-dithianonane, 1,10 bis (β-épithiopropylthio)-5,6-bis[2-β-épithiopropylthioéthyl)thio]-3,6,9-trithiadécane, 1,11-bis(β-épithiopropylthio)-4,8-bis(β-épithiopropylthiométhyl)-3,6,9-trithiaundécane, 1,11-bis(β-épithiopropylthio)-5,7-bis(β-épithiopropylthio méthyl)-3,6,9-trithiaundécane, 1,11-bis(β-épithiopropylthio)-5,7-[(2-β-épithiopropylthio)thiométhyl]-3,6,9-trithiaundécane et 1,11-bis(β-épithiopropylthio)-4,7-bis(β-épithiopropylthiométhyl)-3,6,9-trithiaundécane ; et des composés obtenus par substitution d'au moins un atome d'hydrogène du groupe épisulfure par un groupe méthyl, des composés oragniques cycloaliphatiques tels que 1,3- et 1,4-bis(β-épithiopropylthio)cyclohexanes, 1,3-et 1,4-bis(β-épithiopropylthiométhyl)cyclohexanes, bis[4-(β-épithiopropylthio)

cyclohexyl]méthane, 2,2-bis[4-(β-épithiopropylthio)cyclohexyl]propane, bis[4-(β-épithiopropylthio)cyclohexyl] sulfure, 2,5-bis(β-épithiopropylthiométhyl)-1,4-dithiane et 2,5-bis(β-épithiopropylthioéthylthiométhyl)-1,4-dithiane ; et les composés obtenus en substituant au moins un atome d'hydrogène du groupe épisulfure par un groupe méthyl.

Un composé épisulfure préféré est le bis(β-épithiopropyl)sulfure de formule :

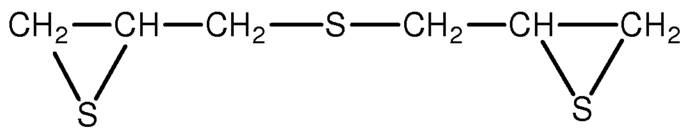

Pour faciliter le démoulage de tels substrats, il est possible d'incorporer des agents de démoulage internes. De tels agents sont décrits dans le brevet EP 271 839.

Les agents de démoulage préférés sont des phosphates acides tels que le dibutyl phosphate. On peut également citer le Zelec UN de la société Stepan qui est un mélange à parts égales des deux composés suivants :

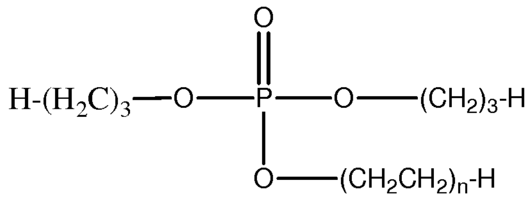

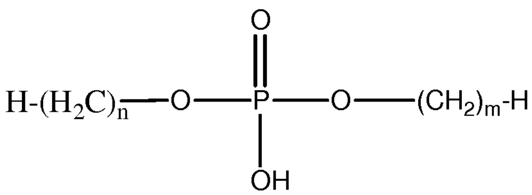

La présence de l'agent de démoulage interne a pour conséquence une diminution de l'adhérence des traitements, en particulier des revêtements, déposés ultérieurement sur le substrat.

L'invention trouve donc un intérêt particulier dans le cas de substrats contenant de tels agents de démoulage.

Le substrat peut être par exemple une lentille ophtalmique, notamment un verre de lunette.

L'invention peut être utilisée pour des substrats présentant une très faible rugosité Ra (moyenne des écarts du profil de rugosité par rapport à la ligne moyenne), typiquement Ra<1 nm.

Toutefois, il est préférable d'utiliser des substrats présentant une rugosité comprise entre 1 et 4 nm, ou mieux supérieure à 4 nm, préférentiellement entre 5 et 30 nm.

La rugosité peut provenir d'un moulage dont les surfaces du moule ne sont pas parfaites. Elle peut aussi provenir d'un traitement chimique, par exemple par un traitement alcalin adapté (potasse, soude).

La présence d'une rugosité permet, en combinaison avec le traitement réducteur selon l'invention, d'obtenir d'excellents résultats d'adhésion pour les revêtements déposés sur le substrat.

Pour la détermination de Ra, on peut utiliser des appareils de mesure tels qu'un appareil de type micromap ou un appareil FTS selon le protocole décrit dans la demande de brevet EP1218439.

Comme expliqué précédemment, le substrat traité par le procédé selon l'invention est destiné à être recouvert par un revêtement.

De préférence, le revêtement est un revêtement polymérique anti-abrasion.

Généralement, le revêtement anti-abrasion est obtenu à partir d'une composition d'hydrolysat de silane, en particulier d'hydrolysat d'époxyalcoxysilane, de préférence d'hydrolysat d'époxydialcoxysilane ou d'époxytrialcoxysilane. Des époxyalcoxysilanes utilisables sont décrits dans les documents FR 2 702 486, WO 94/10230, US 4 211 823 et US 5 015 523.

Une composition pour revêtement anti-abrasion préférée comprend un hydrolysat d'époxyalcoxysilane ou d'époxydialcoxysilane ou d'époxytrialcoxysilane, une charge colloïdale et une quantité catalytique d'acétylacétonate d'aluminium, le reste étant essentiellement constitué par des solvants classiquement utilisés pour la formulation de telles compositions.

Préférentiellement, l'hydrolysat utilisé est un hydrolysat de glycidoxypropyltriméthoxysilane (GLYMO).

Généralement, l'hydrolysat représente 50 à 60% en poids d'extrait sec du poids total de la composition pour revêtement anti-abrasion.

La charge colloïdale peut être choisie par exemple parmi $SiO_2$, $ZrO_2$, $TiO_2$ et leurs mélanges.

Généralement, l'épaisseur du revêtement varie de 1 à 10 μm, de préférence de 2 à 6 μm, mieux de 3 à 5 μm.

Les revêtements anti-abrasion sont généralement déposés par dépôt au trempé ou par centrifugation.

L'invention a encore pour objet un procédé de revêtement d'au moins une surface d'un substrat à base de polymère soufré caractérisé en ce qu'il comprend, préalablement au dépôt du revêtement sur la surface du substrat, une étape de traitement de ladite surface par le procédé de traitement tel que défini précédemment.

L'invention est illustrée par les exemples qui suivent.

## Exemples

### Exemple 1

L'objet de cet exemple est de comparer l'adhésion d'un revêtement anti-abrasion sur 3 substrats identiques mais ayant fait l'objet de différentes préparations de surface.

Les substrats utilisés sont des substrats à base d'un polymère polythiouréthane résultant de la polymérisation du monomère polyisocyanate de formule $C_6H_4(CH_2NCO)_2$ avec le monomère polythiol de formule

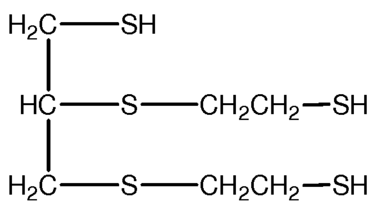

Les propriétés des substrats sont les suivantes :

- indice de réfraction : 1,67
- verre fini (le verre est dans sa forme définitive, ses deux faces principales étant surfacées ou moulées à la géométrie requise)
- géométrie des verres : +0,00
- résultats confirmés sur des verres : -2,00 & -4,00

Chaque substrat est soumis, préalablement au dépôt du revêtement, à un traitement de surface différent.

Le premier substrat est trempé pendant quelques minutes dans une solution aqueuse acide contenant un agent tensioactif, le lauryl éther sulfate de sodium, et maintenue à une température de 50°C. Puis le substrat est rincé par trempage dans un bain d'eau désionisée, puis traité successivement dans un bain de soude à 5%, et dans un bain d'eau désionisée, puis nettoyé dans un bain d'alcool.

Le deuxième substrat est trempé pendant quelques minutes dans une solution de soude à 20%, à une température de 50°C. Puis le substrat est rincé par trempage dans un bain d'eau désionisée, puis traité successivement dans un bain de soude à 5%, et dans un bain d'eau désionisée, puis nettoyé dans un bain d'alcool.

Le troisième substrat est trempé dans une composition de thioglycolate de sodium à 5% en milieu basique (pH supérieur à 12), puis dans un bain d'eau désionisée, puis nettoyé dans un bain d'alcool.

Tous les substrats sont ensuite revêtus d'une composition de revêtement anti-abrasion.

Le revêtement anti-abrasion est obtenu par polymérisation d'une composition comprenant, en extrait sec, 55% en poids de matière sèche obtenue par hydrolyse et condensation du GLYMO et 45% en poids d'un colloïde mixte $TiO_2$(anatase)/$ZrO_2$/$SiO_2$ dispersé à 20% en masse dans le méthanol.

La composition est appliquée sur les substrats par revêtement au trempé (dip coating), et les substrats revêtus sont ensuite soumis à une précuisson de 15 minutes à 60°C et à un étuvage à 110°C pendant 3 heures.

On récupère alors les substrats revêtus du revêtement anti-abrasion qui sont alors soumis à une irradiation dans un appareil Suntest tel qu'un appareil XLS+. Cet appareil délivre une puissance de 280 W/cm$^2$ (60000 Lux au centre du plateau). L'hydrométrie est de 40%. La température de l'air est de 29°C. La température de l'échantillon est de 23°C. Les substrats sont irradiés pendant 200h.

Au cours de l'irradiation, on a mesuré l'adhésion des revêtements sur les substrats.

L'adhésion à sec du revêtement a été mesurée selon la norme ASTM D3359-93, en incisant le revêtement au moyen d'un rasoir pour former une série de 5 lignes espacées de 1 mm, suivie d'une série de 5 lignes espacées de 1 mm, réalisées de la même façon et positionnées à angle droit par rapport à la première série de lignes, l'ensemble formant un grille de 25 carrés. Après soufflage à l'air comprimé de façon à éliminer toute poussière formée lors des rayures, un ruban adhésif en cellophane (3M SCOTCH® n° 600) est appliqué et pressé fermement sur le réseau, puis rapidement enlevé en tirant dans une direction perpendiculaire à la surface du revêtement. Cette procédure est renouvelée deux fois avec un nouveau ruban adhésif identique à celui déjà utilisé.

La lentille est alors examinée.

L'adhésion est notée de la façon suivante:

Tableau 1

| Note Adhésion | Carrés arrachés | % de la surface intact |
|---|---|---|
| 0 | 0 | 100 |
| 1 | <1 | > 96 |
| 2 | 1 to 4 | 96-84 |
| 3 | > 4 to 9 | 83-64 |
| 4 | >9 to 16 | 63-36 |
| 5 | >16 | < 36 |

Les résultats sont donnés dans le tableau 2.

Tableau 2

| | 0h | 50h | 100h | 150h | 200h |
|---|---|---|---|---|---|
| Substrat 1 (solution aqueuse acide avec un tensioactif) | ++ | - | - | - | - |
| Substrat 2 (soude) | ++ | ++ | + | - | - |
| Substrat 3 (thioglycolate de sodium) | ++ | ++ | ++ | ++ | + |
| ++ : très bonne adhérence, aucun point de décollement observé (correspond à la note 0)<br>+ : adhérence moyenne, quelques points de vernis constatés (correspond à la note 1 à 2)<br>- : perte d'adhérence vernis (note 3 à 5). | | | | | |

On constate une nette amélioration de l'adhésion du revêtement anti-abrasion dans les cas où le substrat a été traité avec une composition selon l'invention.

**Exemple 2**

L'objet de cet exemple est de comparer l'adhésion d'un revêtement anti-abrasion sur des substrats ayant fait l'objet de différentes préparations de surface.

Les substrats utilisés sont des substrats à base d'un polymère polythiouréthane identique à celui décrit dans l'exemple 1.

Chaque substrat est soumis, préalablement au dépôt du revêtement, à un traitement de surface différent.

Le premier substrat est trempé pendant quelques minutes dans une solution aqueuse acide contenant un agent tensioactif, le lauryl éther sulfate de sodium, et maintenue à une température de 50°C. Puis le substrat est rincé par trempage dans un bain d'eau désionisée, puis traité successivement dans un bain de soude à 5%, et dans un bain d'eau désionisée, puis nettoyé dans un bain d'alcool.

Le deuxième substrat est trempé pendant quelques minutes dans une solution de soude à 20%, à une température de 50°C. Puis le substrat est rincé par trempage dans un bain d'eau désionisée, puis traité successivement dans un bain de soude à 5%, et dans un bain d'eau désionisée, puis nettoyé dans un bain d'alcool.

Le troisième substrat est trempé dans une composition de traitement selon l'invention composition de thioglycolate de sodium à 5% en milieu basique (pH supérieur à 12), puis dans un bain d'eau désionisée, puis nettoyé dans un bain d'alcool.

Puis, toujours préalablement au dépôt du revêtement, chaque substrat est soumis à une irradiation dans un appareil Suntest tel qu'un appareil XLS+. Cet appareil délivre une puissance de 280 $W/cm^2$ (60000 Lux au centre du plateau). L'hydrométrie est de 40%. La température de l'air est de 29°C. La température de l'échantillon est de 23°C. Les substrats sont irradiés pendant 100h.

Tous les substrats sont ensuite revêtus d'une composition de revêtement anti-abrasion. La composition de revêtement anti-abrasion est identique à celle décrite dans l'exemple 1.

De même que dans l'exemple 1, la composition de revêtement est appliquée sur les substrats par revêtement au trempé (dip coating), et les substrats revêtus sont ensuite soumis à une précuisson de 15 minutes à 60°C et à un étuvage à 110°C pendant 3 heures.

On récupère alors les substrats revêtus du revêtement anti-abrasion qui sont alors soumis à des essais d'adhésion.

On a mesuré l'adhésion des revêtements sur les substrats suivant le test d'adhésion décrit précédemment.

La mesure de l'adhésion est faîte immédiatement après le dépôt et le durcissement du revêtement antiabrasion à $t_0$.

Les résultats sont donnés dans le tableau 3.

Tableau 3

| Traitement de surface | Temps d'irradiation Suntest | adhérence |
|---|---|---|
| Substrat 1 (solution aqueuse acide avec un tensioactif) | 100h | - |
| Substrat 2 (soude) | 100h | - |
| Substrat 3 (thioglycolate de sodium) | 100h | ++ |
| ++ : très bonne adhérence, aucun point de décollement observé<br>- : perte d'adhérence vernis | | |

On constate que l'action d'une composition de traitement selon l'invention permet l'adhésion à $t_0$ du revêtement anti-abrasion sur le substrat.

**Exemple 3**

L'objet de cet exemple est de mesurer la résistance au phénomène de jaunissement lorsque le substrat a fait l'objet d'un traitement de surface selon l'invention.

Les substrats testés sont des substrats à base d'un polymère polythiouréthane identique à celui décrit dans l'exemple 1.

On effectue des mesures colorimétriques de l'angle de teinte h* et de la Chroma C* avec un spectrophotomètre et calculées dans le système CIE (L*, a*, b*).

L'indice de jaune (Yellowness index ) Yi des lentilles est mesuré avant le test et à la fin du test après 200 heures.

L'indice de jaune est déterminé par voie spectroscopique conformément à la norme ASTM D-1325-63.

Yi= (128X-106 Z)/Y formule dans laquelle X, Y, Z sont les coordonnées trichromatiques de l'échantillon mesurées en utilisant un spectrophotomètre UV visible actif dans le spectre de 380 à 780 nm.

Les mesures colorimétriques sont effectuées sur un premier substrat nu, c'est-à-dire n'ayant pas fait l'objet d'un traitement de surface, à 0h puis après 200h d'irradiation avec un appareil Suntest tel que décrit dans l'exemple 1.

Les mesures colorimétriques sont également effectuées sur un second substrat ayant fait l'objet d'un traitement de surface sur ses deux faces à l'aide d'une composition comprenant du thioglycolate de sodium en milieu basique (pH supérieur à 12) selon l'invention, puis irradié pendant 200h avec un appareil Suntest tel que décrit dans l'exemple 1.

Les résultats sont donnés dans les tableaux 4 et 5.

Tableau 4

| Traitement de surface et durée d'irradiation | Yi | C* | h* |
|---|---|---|---|
| Substrat Nu/Oh UV | 1,72 | 1,7 | 120,2 |
| Substrat Nu/200h UV | 3,42 | 2,7 | 113,3 |
| Substrat traité par thioglycolate/200h UV | 2,54 | 2,1 | 115,0 |

Tableau 5

| | Substrat Nu/Oh | Substrat Nu/200h UV | ΔSubstrat Nu/0h-Substrat Nu/200h UV | Substrat thioglycolate/200h UV | ΔSubstrat Nu/Oh UV-Substrat thioglycolate 200h UV |
|---|---|---|---|---|---|
| L* | 94,82 | 94,54 | 0,28 | 94,68 | 0,14 |
| a* | -0,86 | 1,07 | 0,21 | -0,90 | 0,04 |
| b* | 1,48 | 2,49 | 1,01 | 1,94 | 0,46 |

Dans le tableau 4, on a mesuré les coordonnées colorimétriques L*, a* et b* du premier substrat (substrat Nu) avant irradiation (0h) puis après 200h, ainsi que du second substrat traité selon l'invention (substrat thioglycolate) après 200h d'irradiation. On a alors calculé les variations de ces coordonnées colorimétriques pour le premier substrat nu avant et après irradiation, ainsi qu'entre le premier substrat nu avant irradiation et le second substrat traité après irradiation.

La variation de la coloration est donnée par la formule suivante :

$$\Delta E = \sqrt{\Delta L^{*2} + \Delta a^{*2} + \Delta b^{*2}}$$

On obtient :

ΔE Substrat Nu/OhUV-Substrat Nu/200hUV > 1
ΔE Substrat Nu/OhUV-Substrat thioglycolate/200hUV < 1

On constate donc que la variation de la couleur lorsque le substrat a fait l'objet d'un traitement de surface au thioglycolate de sodium selon l'invention est très faible par rapport au cas où le substrat n'a pas fait l'objet d'un traitement de surface préalable.

**Exemple 4 :** Effet combiné d'un traitement à base d'un agent réducteur et de la rugosité de la surface

Des lentilles ophtalmiques en polythiouréthane obtenues par polymérisation de bis(isocyanomethyl) norbornane, de pentaerythritol tetrakis(mercaptopropionate) PETMP ) et de 4-Mercaptomethyl-3,6-dithia-1,8-octanedithiol et présentant une rugosité de surface Ra de 10 nm sont traitées par une composition de traitement selon l'invention identique à celle du troisième substrat de l'exemple 1. On dépose un revêtement antiabrasion identique à celui de l'exemple 1.

100% des verres présentent une adhésion ++ après 250 heures de Suntest (appareil et conditions identiques à celles de l'exemple 1)

La rugosité de surface Ra est mesurée au moyen d'un appareil Micromap 512.

**Revendications**

1. Procédé de traitement d'au moins une surface d'un substrat à base de polymère soufré destiné à être recouvert par un revêtement, ledit procédé comprenant, préalablement au dépôt du revêtement sur la surface du substrat, une étape de mise en contact de la surface du substrat avec une composition de traitement comprenant, en poids, par rapport au poids total de la composition, 2 à 30% d'au moins un agent réducteur, le ou les agents réducteurs étant des thioacides ou leurs sels aptes à réduire les liaisons C-S, S-S, CON, les sels.

2. Procédé selon la revendication 1, **caractérisé en ce que** le ou les agents réducteurs sont choisis parmi l'acide thioglycolique, le thioglycolate de potassium, le thioglycolate de sodium, le thioglycolate de calcium, le thioglycolate de magnésium, le monothioglycolate de glycérol, le thioglycolate d'ammonium, les thioglycolates d'amines tel que le thioglycolate de monoéthanolamine, le dithioglycolate de diammonium, l'acide thiolactique, le thiolactate d'ammonium, le thioglycolate de guanidine, l'acide thiomalique, l'acide 2-mercaptoproprionique, l'acide 3-mercaptoproprionique, l'acide lipoïque, l'acide dihydrolipoïque, l'acide thiosalicylique, le dithioérythritol, le thioglycérol, le thioglycol, le dithioérythritol, le dithiothréitol, le 1,3-dithiopropanol, la thioxanthine, la cystéine, l'homocystéine, la N-acétyl-L-cystéine, la cystéamine, la N-acétyl-cystéamine, la N-propionyl-cystéamine, la panthétéine, $NaHSO_3$, LiS, $Na_2S$, $K_2S$, MgS, CaS, SrS, BaS, $(NH_4)_2S$, le sodium dihydrolipoate 6,8-dithiooctanoate, le sodium 6,8-dithiooctanoate, les sels de l'acide sulfhydrique tel que NaSH et KSH, le thioglycolamide, la glutathione, le thioglycolhydrazide, la kératinase, le sulfate d'hydrazine, le disulfate d'hydrazine, le triisocyanate, l'acide 2,3-dimercaptosuccinique, les N-(mercaptoalkyl)-ω-hydroxyalkylamides, les N-mono ou N,N-dialkylmercapto-4-butyramides, les aminomercapto-alkylamides, les dérivés des acides N-(mercaptoalkyl)succinamiques et des N-(mercaptoalkyl)succinimides, les alkylamino mercaptoalkylamides, le mélange azéotrope de thioglyconate de 2-hydroxypropyle et de thioglycolate de (2-hydroxy-1-méthyl)éthyle, les mercaptoalkylaminoamides, les N-mercapto-alkylalcanediamides et les dérivés d'acide formamidine sulfinique, les sulfites, les bisulfites, et leurs sels.

3. Procédé selon la revendication 2 **caractérisé en ce que** le ou les agents réducteurs sont choisis parmi le thioglycolate de sodium, le thioglycolate de potassium, le thioglycolate d'ammonium et les thioglycolates d'amines.

4. Procédé selon l'une quelconque des revendications 1 à 3 **caractérisé en ce que** le pH de la composition de traitement est supérieur à 10, de préférence supérieur à 12.

5. Procédé selon l'une quelconque des revendications 1 à 4 **caractérisé en ce que** la composition de traitement comprend 2 à 15%, mieux de préférence 5 à 10% en poids, par rapport au poids total de la composition, du ou desdits agents réducteurs.

6. Procédé selon l'une quelconque des revendications 1 à 5 **caractérisé en ce que** la composition de traitement comprend au moins un sulfure métallique.

7. Procédé selon l'une quelconque des revendications 1 à 6 **caractérisé en ce qu'**il ne comprend pas d'étape subséquente d'application sur le substrat d'une solution de soude.

8. Procédé selon l'une quelconque des revendications précédentes **caractérisé en ce qu'**il comprend une étape additionnelle de traitement avec une composition oxydante comprenant au moins un agent oxydant.

9. Procédé selon la revendication 8, **caractérisé en ce que** le ou les agents oxydants sont choisis parmi l'eau oxygénée, les bromates alcalins, les polythionates et les persels, tels que les perborates, les percarbonates, les persulfates et les permanganates, de préférence parmi $H_2O_2$ et $KMnO_4$.

10. Procédé selon l'une quelconque des revendications 8 à 9 **caractérisé en ce que** la composition oxydante comprend 2 à 15%, de préférence 5 à 10% en poids, par rapport au poids total de la composition, du ou desdits agents oxydants.

11. Procédé selon l'une quelconque des revendications 1 à 10, **caractérisé en ce qu'**il comprend une étape additionnelle de traitement avec une composition de phosphorylation comprenant au moins un agent de phosphorylation, de préférence choisi parmi les trialkylphosphites, l'acide phosphonique et l'acide phosphinique.

12. Procédé selon la revendication 11, **caractérisé en ce que** la composition de phosphorylation comprend 2 à 15%, de préférence 5 à 10% en poids, par rapport au poids total de la composition, du ou desdits agents de phosphorylation.

13. Procédé selon l'une quelconque des revendications précédentes, **caractérisé en ce que** le polymère soufré du substrat est choisi parmi les polythio(méth)acrylates, les polythiouréthanes, les polythiouréthane-urée et les polyépisulfures, de préférence les polythiouréthanes résultant de la polymérisation d'au moins un monomère polyisocyanate et d'au moins un monomère polythiol.

14. Procédé selon l'une quelconque des revendications précédentes, **caractérisé en ce que** le substrat présente une rugosité Ra, mesurée avec appareil FTS utilisant un stylet présentant une pointe diamantée de rayon de 2 μm, inférieure à 4 nm, de préférence entre 1 et 4 nm.

**15.** Procédé selon l'une quelconque des revendications 1 à 13, **caractérisé en ce que** le substrat présente une rugosité Ra, mesurée avec appareil FTS utilisant un stylet présentant une pointe diamantée de rayon de 2 $\mu$m, supérieure à 4 nm, de préférence comprise entre 5 et 30 nm.

**16.** Procédé selon l'une quelconque des revendications précédentes **caractérisé en ce que** le substrat est une lentille ophtalmique, de préférence un verre de lunette.

**17.** Procédé de revêtement d'au moins une surface d'un substrat à base de polymère soufré **caractérisé en ce qu'**il comprend, préalablement au dépôt du revêtement sur la surface du substrat, une étape de traitement de ladite surface par le procédé de traitement selon l'une quelconque des revendications précédentes.

**18.** Procédé selon la revendication 17, **caractérisé en ce que** le revêtement est un revêtement polymérique anti-abrasion, de préférence à base d'un hydrolysat d'époxyalcoxysilane, mieux d'époxydialcoxysilane ou d'époxytrialcoxysilane.

## Patentansprüche

**1.** Verfahren zur Behandlung mindestens einer Oberfläche eines Substrats auf Basis von Schwefelpolymer, das zur Bedeckung mit einer Beschichtung bestimmt ist, wobei das Verfahren vor der Abscheidung der Beschichtung auf der Oberfläche des Substrats einen Schritt des Inberührungbringens der Oberfläche des Substrats mit einer Behandlungszusammensetzung, die 2 bis 30 Ges.-%, bezogen auf das Gesamtgewicht der Zusammensetzung, mindestens eines Reduktionsmittels umfasst, umfasst, wobei es sich bei dem Reduktionsmittel bzw. den Reduktionsmitteln um Thiosäuren oder Salze davon, die zur Reduktion von C-S-, S-S-, CON-Bindungen, Salzen befähigt sind, handelt.

**2.** Verfahren nach Anspruch 1, **dadurch gekennzeichnet, dass** man das bzw. die Reduktionsmittel aus Thioglykolsäure, Kaliumthioglykolat, Natriumthioglykolat, Calciumthioglykolat, Magnesiumthioglykolat, Glycerinmonothioglykolat, Ammoniumthioglykolat, Aminthioglykolaten wie Monoethanolaminthioglykolat, Diammoniumdithioglykolat, Thiomilchsäure, Ammoniumthiolactat, Guanidinthioglykolat, Thioäpfelsäure, 2-Mercaptopropionsäure, 3-Mercaptopropionsäure, Liponsäure, Dihydroliponsäure, Thiosalicylsäure, Dithioerythritol, Thioglycerin, Thioglykol, Dithioerythritol, Dithiothreitol, 1,3-Dithiopropanol, Thioxanthin, Cystein, Homocystein, N-Acetyl-L-cystein, Cysteamin, N-Acetylcysteamin, N-Propionylcysteamin, Panthetein, $NaHSO_3$, LiS, $Na_2S$, $K_2S$, MgS, CaS, SrS, BaS, $(NH_4)_2S$, Natriumdihydrolipoat-6,8-dithiooctanoat, Natrium-6,8-dithiooctanoat, Salzen von Schwefelwasserstoffsäure wie NaSH und KSH, Thioglykolamid, Glutathion, Thioglykolhydrazid, Keratinase, Hydrazinsulfat, Hydrazindisulfat, Triisocyanat, 2,3-Dimercaptobernsteinsäure, N-(Mercaptoalkyl)-$\omega$-hydroxyalkylamiden, N-Mono- oder N,N-Dialkylmercapto-4-butyramiden, Aminomercaptoalkylamiden, Derivaten von N-(Mercaptoalkyl)-succinamidsäuren und N-(Mercaptoalkyl)succinimiden, Alkylaminomercaptoalkylamiden, der azeotropen Mischung von 2-Hydroxypropylthioglykolat und (2-Hydroxy-1-methyl)ethylthioglykolat, Mercaptoalkylaminoamiden, N-Mercaptoalkylalkandiamiden und Derivaten von Formamidinsulfinsäure, Sulfiten, Bisulfiten und Salzen davon auswählt.

**3.** Verfahren nach Anspruch 2, **dadurch gekennzeichnet, dass** man das bzw. die Reduktionsmittel aus Natriumthioglykolat, Kaliumthioglykolat, Ammoniumthioglykolat und Aminthioglykolaten auswählt.

**4.** Verfahren nach einem der Ansprüche 1 bis 3, **dadurch gekennzeichnet, dass** der pH-Wert der Behandlungszusammensetzung größer als 10, vorzugsweise größer als 12, ist.

**5.** Verfahren nach einem der Ansprüche 1 bis 4, **dadurch gekennzeichnet, dass** die Behandlungszusammensetzung 2 bis 15 Gew.-%, weiter bevorzugt 5 bis 10 Gew.-%, bezogen auf das Gesamtgewicht der Zusammensetzung, des Reduktionsmittels bzw. der Reduktionsmittel umfasst.

**6.** Verfahren nach einem der Ansprüche 1 bis 5, **dadurch gekennzeichnet, dass** die Behandlungszusammensetzung mindestens ein Metallsulfid umfasst.

**7.** Verfahren nach einem der Ansprüche 1 bis 6, **dadurch gekennzeichnet, dass** es keinen anschließenden Schritt des Aufbringens einer Natriumhydroxidlösung auf das Substrat umfasst.

**8.** Verfahren nach einem der vorhergehenden Ansprüche, **dadurch gekennzeichnet, dass** es einen zusätzlichen

Schritt des Behandelns mit einer oxidierenden Zusammensetzung, die mindestens ein Oxidationsmittel umfasst, umfasst.

9. Verfahren nach Anspruch 8, **dadurch gekennzeichnet, dass** man das bzw. die Oxidationsmittel aus Wasserstoffperoxid, Alkalibromaten, Polythionaten und Persalzen, wie Perboraten, Percarbonaten, Persulfaten und Permanganaten, vorzugsweise aus $H_2O_2$ und $KMnO_4$, auswählt.

10. Verfahren nach einem der Ansprüche 8 bis 9, **dadurch gekennzeichnet, dass** die oxidierende Zusammensetzung 2 bis 15 Ges.-%, vorzugsweise 5 bis 10 Ges.-%, bezogen auf das Gesamtgewicht der Zusammensetzung, des Oxidationsmittels bzw. der Oxidationsmittel umfasst.

11. Verfahren nach einem der Ansprüche 1 bis 10, **dadurch gekennzeichnet, dass** es einen zusätzlichen Schritt des Behandelns mit einer Phosphorylierungszusammensetzung, die mindestens ein Phosphorylierungsmittel umfasst, das vorzugsweise aus Trialkylphosphiten, Phosphonsäure und Phosphinsäure ausgewählt wird, umfasst.

12. Verfahren nach Anspruch 11, **dadurch gekennzeichnet, dass** die Phosphorylierungszusammensetzung 2 bis 15 Gew.-%, vorzugsweise 5 bis 10 Gew.-%, bezogen auf das Gesamtgewicht der Zusammensetzung, des Phosphorylierungsmittels bzw. der Phosphorylierungsmittel umfasst.

13. Verfahren nach einem der vorhergehenden Ansprüche, **dadurch gekennzeichnet, dass** man das Schwefelpolymer des Substrats aus Polythio(meth)acrylaten, Polythiourethanen, Polythiourethanharnstoffen und Polyepisulfiden auswählt, wobei die Polythiourethane vorzugsweise aus der Polymerisation von mindestens einem Polyisocyanat-Monomer und mindestens einem Polythiol-Monomer resultieren.

14. Verfahren nach einem der vorhergehenden Ansprüche, **dadurch gekennzeichnet, dass** das Substrat eine auf einer FTS-Apparatur unter Verwendung einer Nadel mit einer Diamantspitze mit einem Radius von 2 μm gemessene Rauheit Ra von weniger als 4 nm, vorzugsweise zwischen 1 und 4 nm, aufweist.

15. Verfahren nach einem der Ansprüche 1 bis 13, **dadurch gekennzeichnet, dass** das Substrat eine auf einer FTS-Apparatur unter Verwendung einer Nadel mit einer Diamantspitze mit einem Radius von 2 μm gemessene Rauheit Ra von mehr als 4 nm, vorzugsweise zwischen 5 und 30 nm, aufweiset.

16. Verfahren nach einem der vorhergehenden Ansprüche, **dadurch gekennzeichnet, dass** es sich bei dem Substrat um eine ophthalmische Linse, vorzugsweise ein Brillenglas, handelt.

17. Verfahren zum Beschichten mindestens einer Oberfläche eines Substrats auf Basis von Schwefelpolymer, **dadurch gekennzeichnet, dass** es vor der Abscheidung der Beschichtung auf der Oberfläche des Substrats einen Schritt des Behandelns der Oberfläche durch ein Behandlungsverfahren nach einem der vorhergehenden Ansprüche umfasst.

18. Verfahren nach Anspruch 17, **dadurch gekennzeichnet, dass** es sich bei der Beschichtung um eine polymere Antiabrieb-Beschichtung, vorzugsweise auf Basis eines Epoxyalkoxysilan-Hydrolysats, besser eines Epoxydialkoxysilan- oder Epoxytrialkoxysilan-Hydrolysats, handelt.

**Claims**

1. A method for treating at least one surface of a substrate based on sulphur polymer intended to be covered with a coating, said method comprising, prior to depositing the coating onto the surface of the substrate, a step of bringing the surface of the substrate into contact with a treating composition comprising by weight, based on the total weight of the composition, 2 to 30 % of at least one reducing agent, the reducing agent(s) being thioacids or salts thereof capable to reduce C-S, S-S, CON limks.

2. A method according to claim 1, wherein the reducing agent(s) is or are selected from thioglycolic acid, potassium thioglycolate, sodium thioglycolate, calcium thioglycolate, magnesium thioglycolate, glycerol monothioglycolate, ammonium thioglycolate, amine thioglycolates such as monoethanol amine thioglycolate, diammonium dithioglycolate, thiolactic acid, ammonium thiolactate, guanidine thioglycolate, thiomalic acid, 2-mercaptoproprionic acid, 3-mercaptoproprionic acid, lipoic acid, dihydrolipoic acid, thiosalicylic acid, dithioerythritol, thioglycerol, thioglycol,

dithioerythritol, dithiothreitol, 1,3-dithiopropanol, thioxanthine, cysteine, homocysteine, a N-acetyl-L-cysteine, cysteamine, N-acetyl-cysteamine, N-propionylcysteamine, pantheteine, $NaHSO_3$, LiS, $Na_2S$, $K_2S$, MgS, CaS, SrS, BaS, $(NH_4)_2S$, sodium dihydrolipoate 6,8-dithiooctanoate, sodium 6,8-dithiooctanoate, hydrogen sulfide salts such as NaSH and KSH, thioglycolamide, glutathione, thioglycol hydrazide, keratinase, hydrazine sulfate, hydrazine disulfate, triisocyanate, 2,3-dimercaptosuccinic acid, N-(mercaptoalkyl)-ω-hydroxyalkyl amides, N-mono or N,N-dialkyjmercapto-4-butyramides, aminomercapto-alkyl amides, N-(mercaptoalkyl)succinamic acid derivatives and N-(mercaptoalkyl)succinimide derivatives, alkylamino mercaptoalkyl amides, azeotropic mixture of 2-hydroxypropyl thioglycolate and (2-hydroxy-1-methyl)ethyl thioglycolate, mercaptoalkyl aminoamides, N-mercapto-alkylalkane diamides and formamidine sulfinic acid derivatives, sulfites, bisulfites, and salts thereof.

**3.** A method according to claim 2, wherein the reducing agent(s) is or are selected from sodium thioglycolate, potassium thioglycolate, ammonium thioglycolate and amine thioglycolates.

**4.** A method according to any claim 1 to 3, wherein the pH value of the treating composition is higher than 10, preferably higher than 12.

**5.** A method according to any claim 1 to 4, wherein the treating composition comprises from 2 to 15%, more preferably from 5 to 10% by weight, as related to the composition total weight, of said reducing agent(s).

**6.** A method according to any claim 1 to 5, wherein the treating composition comprises at least one metal sulphur.

**7.** A method according to any claim 1 to 6, which does not comprise any subsequent step of applying a soda solution onto the substrate.

**8.** A method according to any preceding claim, which comprises an additional treating step with an oxidizing composition comprising at least one oxidizing agent.

**9.** A method according to claim 8, wherein the oxidizing agent(s) is or are selected from hydrogen peroxide, alkali bromates, polythionates and persalts, such as perborates, percarbonates, persulfates and permanganatesn, preferably from $H_2O_2$ and $KMnO_4$.

**10.** A method according to any claim 8 to 9, wherein the oxidizing composition comprises from 2 to 15%, preferably from 5 to 10% by weight, as related to the composition total weight, of said oxidizing agent(s).

**11.** A method according to any claim 1 to 10, which comprises an additional treating step with a phosphorylation composition comprising at least one phosphorylating agent, preferably selected from trialkylphosphites, phosphonic acid and phosphinic acid.

**12.** A method according to claim 11, wherein the phosphorylation composition comprises from 2 to 15%, preferably from 5 to 10% by weight, as related to the composition total weight, of said phosphorylating agent(s).

**13.** A method according to any preceding claim, wherein the sulphur polymer in the substrate is selected from polythio(meth)acrylates, polythiourethanes, polythiourethane-urea and polyepisulfides, preferably polythiourethanes resulting from the polymerization of at least one polyisocyanate monomer and at least one polythiol monomer.

**14.** A method according to any preceding claim, wherein the substrate has a roughness Ra as measured with FTS apparatus using a stylet with a diamond tip lower than 4 nm, preferably ranging from 1 to 4 nm.

**15.** A method according to any claim 1 to 13, wherein the substrate has a roughness Ra as measured with a FTS apparatus using a stylet having a diamond tip of 2 μm radius, higher than 4 nm, preferably ranging from 5 to 30 nm.

**16.** A method according to any preceding claim, wherein the substrate is an ophthalmic lens, preferably a glass for eyeglasses.

**17.** A method for coating at least one surface of a substrate based on sulphur polymer which comprises, prior to depositing the coating onto the surface of the substrate, a treating step of said surface using the treating method according to any preceding claim.

**18.** A method according to claim 17, wherein the coating is an abrasionresistant polymer coating, preferably based on an epoxyalkoxysilane hydrolyzate, more preferably an epoxydialkoxysilane or an epoxytrialkoxysilane hydrolyzate.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1053279 A
- GB 2413074 A
- US 5741831 A
- EP 394495 A
- US 5087758 A
- US 5191055 A
- US 4775733 A
- US 4689387 A
- US 5837797 A
- US 5608115 A
- WO 03042270 A
- EP 874016 A
- EP 0942027 A
- EP 271839 A
- EP 1218439 A
- FR 2702486
- WO 9410230 A
- US 4211823 A
- US 5015523 A